(19) Europäisches Patentamt
European Patent Office
Office européen des brevets

(11) **EP 4 035 868 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **22020020.8**

(22) Anmeldetag: **22.01.2022**

(51) Internationale Patentklassifikation (IPC):
**B29C 48/92** (2019.01)

(52) Gemeinsame Patentklassifikation (CPC):
**B29C 48/92;** B29C 2948/92047; B29C 2948/92076;
B29C 2948/924

(54) **VERFAHREN ZUR BESTIMMUNG DER MECHANISCH EINGEBRACHTEN LEISTUNG IN EXTRUDERN**

METHOD FOR DETERMINING THE MECHANICAL POWER IN EXTRUDERS

PROCÉDÉ DE DÉTERMINATION DE LA PUISSANCE INTRODUITE MÉCANIQUEMENT DANS LES EXTRUDEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2021 AT 232021**

(43) Veröffentlichungstag der Anmeldung:
**03.08.2022 Patentblatt 2022/31**

(73) Patentinhaber: **Pro2Future GmbH**
**4040 Linz (AT)**

(72) Erfinder:
• **Brillinger, Markus**
**8020 Graz (AT)**
• **Löw-Baselli, Bernhard**
**4320 Perg (AT)**
• **Prechtl, Maximilian**
**4484 Kronstorf (AT)**
• **Roland, Wolfgang**
**4113 St. Martin im Mühlkreis (AT)**

(74) Vertreter: **Peham, Alois**
**Lederergasse 23/11/139**
**1080 Wien (AT)**

(56) Entgegenhaltungen:
WO-A1-92/00512      DE-A1- 1 798 201
US-A1- 2002 146 475

• **MENGES G ET AL: "SCHMELZEEIGENSCHAFTEN IM EXTRUSIONSPROZESS UBERWACHEN", PLASTVERARBEITER, HUETHIG GMBH, HEIDELBERG, DE, vol. 40, no. 4, 1 April 1989 (1989-04-01), XP000083982, ISSN: 0032-1338**

**Beschreibung**

Die Erfindung betrifft ein Verfahren zur Bestimmung der mechanisch eingebrachten Leistung in Extrudern.

Mit Extrudern werden feste bis zähflüssige Massen (Extrudate) unter Druck kontinuierlich durch eine formgebende Öffnung gepresst. Dabei entstehen Körper mit dem Querschnitt der Öffnung in theoretisch beliebiger Länge.

Bei Schneckenextrudern wird der Druck mittels einer Extruderschnecke erzeugt. Sie ist von einem Zylinder ummantelt, an dessen vorderem Ende sich die formgebende Auslassöffnung (Werkzeug) befindet. Am gegenüberliegenden, hinteren Ende des Zylinders befindet sich der Antrieb, in den meisten Fällen ein Elektromotor mit Getriebeeinheit, der für die Rotation der Schnecke sorgt.

Die zu verarbeitenden Materialien werden der Schnecke meist kontinuierlich über einen Trichter von oben zugeführt.

Die Extruderschnecke bzw. -schnecken hat/haben verschiedenste Aufgaben, welche sich je nach Anwendungsgebiet unterscheiden können. Zu diesen Aufgaben gehören, das zu extrudierende Material zu fördern, zu plastifizieren bzw. aufzuschmelzen, zu homogenisieren und dieses durch eine Düse zu pumpen. Design und Anzahl der Extruderschnecken können somit je nach Anforderungen stark variieren.

Physikalisch betrachtet, werden Förderung und Druckaufbau durch die Reibung der mit der Schnecke rotierenden Masse an der stehenden Gehäusewand (Zylinder) bewirkt - man spricht in diesem Zusammenhang von Friktionsförderung. Die so in der Rotation zurückbleibende Masse wird von den wendelförmigen Schneckengängen zur Auslassdüse geschoben.

Der Verlauf der durch die Reibung eingebrachten Leistung über die Schneckenlänge ist eine wichtige Prozessgröße und bietet Antworten auf viele Detailfragen beispielsweise zu den Themen Schneckendesign, Prozesseinstellung, -regelung, Energiemanagement, Qualitäts- und Wartungsmanagement.

Dieser Verlauf der mechanischen Leistung könnte grundsätzlich durch geeignete Sensorik in der Schnecke gemessen werden, was allerdings sehr aufwändig ist. Aus der Druckschrift DE 17 98 201 A1 ist bekannt, dass die Verdrillung des Extrudergehäuses, welche über Dehnungsmessstreifen erfasst werden kann, Rückschlüsse auf rheologische Eigenschaften zulassen kann.

Der Erfindung liegt die Aufgabe zugrunde, ein Verfahren anzugeben, mit dem der Verlauf der mechanischen Leistung bestimmt werden kann.

Erfindungsgemäß geschieht dies mit einem Verfahren zur Bestimmung der axialen Leistungsverteilung in einem Extruder, welcher eine angetriebene Extruderschnecke und einen dieselbe umgebenden Zylindermantel umfasst, wobei zumindest ein an einem Messpunkt an der Außenseite des Zylindermantels angebrachtes Reflexionselement mittels Laserelement angestrahlt wird und aus dem reflektierten Laserstrahl die Verdrehung des Zylindermantels am Messpunkt bestimmt und daraus die in das Extrudat eingebrachte Leistung ermittelt wird.

Die Erfindung beruht auf der Erkenntnis, dass das, mittels der Schnecke in den Extruder eingebrachte Drehmoment, über die auftretenden Reibungskräfte an der Gehäusewand zu einer geringfügigen Verdrehung des Zylindermantels führt.

Der Verlauf der mechanischen Leistung könnte grundsätzlich durch geeignete Sensorik, wie beispielsweise Dehnmessstreifen auch an der Schnecke gemessen werden, was allerdings in der Praxis einige Probleme mit sich bringt. Bringt man einen Dehnmessstreifen außen an der Schnecke an, so ist dieser sehr großen Drücken und Temperaturen, sowie starken abrasiven Kräften ausgesetzt. Zusätzlich stellt das Abgreifen des Messsignals hier ein großes Problem dar. Eine theoretische Alternative ist das Verwenden einer Hohlschnecke und das Anbringen von Dehnmessstreifen auf der Innenseite. Bei Verwendung einer Hohlschnecke verringert sich allerdings die Festigkeit der Schnecke, sodass für viele gängige Schneckenbaugrößen die Festigkeit nicht mehr ausreicht um das erforderliche Drehmoment zu übertragen. Des Weiteren ist das Anbringen der Dehnmessstreifen auf der Innenseite auf Grund der limitierten Platzverhältnisse äußerst schwierig.

Auf Grund des Momentengleichgewichtes muss das Drehmoment welches über die Schneckenrotation eingebracht wird, durch den umgebenden Zylinder abgestützt werden. In den meisten Fällen ist der Zylinder am Austrittsende des Extrudats rotatorisch nicht abgestützt, sondern nur am Getriebe/Motor fix angeflanscht. Das heißt der Drehmomentenverlauf über die axiale Länge des Zylinders ist ident mit dem Drehmomentenverlauf über die axiale Länge der Schnecke. Eine Messung mittels DMS am Zylinder ist aber auf Grund der sehr hohen Verdrehsteifigkeit des Zylinders technisch nicht realisierbar.

Erfindungsgemäß wird daher die Verdrehung unter Zuhilfenahme eines Laserstrahls ermittelt. Durch geeignete Bestrahlung eines an einem Messpunkt an der Außenseite des Zylindermantels angebrachtes Reflexionselementes und Projektion des reflektierten Laserstrahls auf eine Fläche, kann auf dieser Projektionsfläche der Abstand der Position des Laserstrahls von einer 0-Position gemessen und damit das Ausmaß der Verdrehung präzise und zuverlässig bestimmt werden. Diese Verdrehung ist ein indirektes Maß für das Drehmoment, welches aufgrund der im Inneren des Zylindermantels auftretenden Reibungskräfte an der Position des Messpunktes auftritt.

Wenn mehrere Messpunkte über die Länge des Zylindermantels verteilt sind kann in vorteilhafter Weise aus den ermittelten Werten ein Verlauf des Drehmomentes, sowie der in das Extrudat eingebrachten Leistung über die Länge des Extruders ermittelt wird.

Die Ablenkung des Laserstrahles und damit die Messgenauigkeit kann in vorteilhafter Weise erhöht werden, wenn in den Verlauf zwischen Messpunkt und Projektionsfläche mehrere Reflexionselemente eingefügt sind.

Günstig ist es weiterhin, wenn als Projektionsfläche ein digitaler Bildsensor vorgesehen ist und wenn die Position des Laserstrahles mit Mitteln der digitalen Bildverarbeitung bestimmt wird.

Die Erfindung wird anhand von Figuren näher erläutert.

Es zeigen beispielhaft:

Fig. 1 schematisch den Aufbau eines Extruders mit der erfindungsgemäßen Messvorrichtung.

Fig. 2 eine schematische Darstellung der geometrischen Zusammenhänge zwischen der Verdrehung des Zylindermantels und der Position des Laserstrahls.

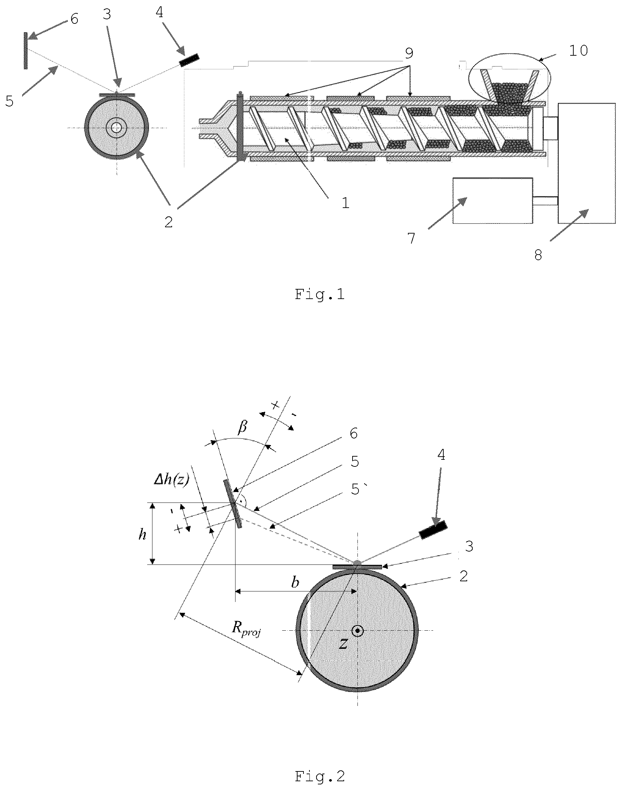

Der Extruder nach Figur 1 umfasst eine Extruderschnecke 1, die von einem Motor 7 über eine Getriebeeinheit 8 in Rotation versetzt wird. Sie ist von einem Zylindermantel 2 umgeben, an dessen vorderem Ende sich die formgebende Auslassöffnung (Werkzeug) befindet. Am hinteren Ende befindet sich ein Einfülltrichter 10.

Erfindungsgemäß sind auf dem Zylindermantel 2 ein oder mehrere Spiegel als Reflexionselemente 3 starr angebracht, die von einem Laserstrahl 5 in einem bestimmten Winkel angestrahlt werden. Der reflektierte Laserstrahl 5 trifft in weiterer Folge auf eine Projektionsfläche 6 auf. Auf dieser Projektionsfläche kann die Abweichung des Laserstrahls 5 von einer 0-Position - d.h. der Position ohne Verdrehung des Zylindermantels 2 gemessen und damit das Ausmaß der Verdrehung präzise und zuverlässig bestimmt werden.

Durch diese Anordnung wird der Betrag der Verdrehung des Zylindermantels 2 durch drei Faktoren verstärkt. Es sind dies die Projektionslänge $R_{proj}$, der Einfallswinkel des Laserstrahls 5 auf die Projektionsfläche $\beta$ und die Verdoppelung der Verdrehung durch das Reflexionsgesetz.

Eine weitere Verstärkung des Betrages der Abweichung des Laserstrahls 5 kann erfolgen, indem in den Verlauf des Laserstrahls 5 zwischen Messpunkt und Projektionsfläche 6 mehrere Reflexionselemente 3 eingefügt werden.

Fig. 2 zeigt eine beispielhafte Verschiebung des Laserstrahls 5 zu 5', welche durch eine Verdrehung des Zylindermantels 2 bewirkt wird.

Der Winkel der Verdrehung des Zylindermantels 2 kann an einer Position, bestimmt durch die Laufvariable z (axiale Position des Zylindermantels), wie folgt berechnet werden:

$$\theta(z) = \frac{1}{2} \cdot \arctan\left(\frac{\Delta h(z) \cdot \cos(\beta)}{R_{proj} + \Delta h(z) \cdot \sin(\beta)}\right)$$

Mit $\theta(z)$... Verdrehwinkel

$\Delta h$ ... Änderung der Laserstrahlablenkung gemessen an der Projektionsebene.

$\beta$ ... Einfallswinkel des Laserstrahls auf eine Projektionsebene

$R_{proj}$ ... Projektionslänge

Die so ermittelte Verdrehung des Zylindermantels 2 am Messpunkt ist ein Maß für das dort anliegende Drehmoment gemäß

$$T(z) = G \cdot I_P \cdot \varphi(z) \qquad \text{und} \qquad \varphi(z) = \frac{\partial \theta(z)}{\partial z}$$

Mit $T(z)$ ... Drehmoment

$G$ ... Schubmodul

$I_P$ ... polares Widerstandsmoment

$\varphi(z)$ ... Verdrillung

$\theta(z)$ ... Verdrehung

Ein axialer Drehmomentenverlauf über die gesamte Länge des Extruders kann durch Messung und Auswertung an mehreren, über die Länge verteilten Messpunkten und Interpolation für die dazwischen liegenden Bereiche ermittelt werden.

Aus dem Drehmomentverlauf wird dann der Verlauf der durch Reibung in das Extrudat eingebrachten Leistung bestimmt, gemäß:

$$\frac{\partial P_M}{\partial z} = -\frac{\partial T_S}{\partial z} \cdot \omega$$

Mit $P_M$ ... Leistung im Material

$T_S$ ... Drehmoment der Schnecke

$\omega$ ... Schneckendrehzahl

Dieser Verlauf, der, durch die Reibung in das Extrudat, eingebrachten Leistung über die Schneckenlänge, ist eine wichtige Kenngröße für die Optimierung des Extrusionsprozesses und der Anlagen.

Als Projektionsfläche 6 kann ein digitaler Bildsensor vorgesehen werden, der beispielsweise als sogenannter CCD-Bildsensor ausgeführt sein kann und eine Matrix lichtempfindlicher Fotodioden umfasst. Damit kann die Position des Laserstrahles elektronisch bestimmt und ausgewertet werden. Für den Bildsensor sind auch andere übliche Technologien wie beispielsweise CMOS-Sensoren in vorteilhafter Weise einsetzbar.

Bezugszeichenliste

| 1 | Extruderschnecke |
|---|---|
| 2 | Zylindermantel |
| 3 | Reflexionselement |
| 4 | Laserelement |
| 5 | Laserstrahl |
| 6 | Projektionsfläche |
| 7 | Motor |
| 8 | Getriebeeinheit |
| 9 | Heizelement |
| 10 | Einfülltrichter |

**Patentansprüche**

1. Verfahren zur Bestimmung der mechanisch eingebrachten Leistung in einem Extruder, welcher eine angetriebene Extruderschnecke und einen dieselbe umgebenden Zylindermantel umfasst, **dadurch gekennzeichnet, dass** zumindest ein an einem Messpunkt an der Außenseite des Zylindermantels angebrachtes Reflexionselement (3) mittels Laserelement (4) angestrahlt wird und aus dem reflektierten Laserstrahl (5) die Verdrehung des Zylindermantels (2) am Messpunkt bestimmt und daraus die in das Extrudat eingebrachte Leistung ermittelt wird.

2. Verfahren nach Anspruch 1, **dadurch gekennzeichnet, dass** mehrere Messpunkte vorgesehen sind und aus den ermittelten Werten ein Verlauf der in das Extrudat eingebrachten Leistung über die Länge des Extruders ermittelt wird.

3. Verfahren nach einem der Ansprüche 1 oder 2, **dadurch gekennzeichnet, dass** als Reflexionselemente (3) Spiegel vorgesehen sind.

4. Verfahren nach einem der Ansprüche 1 bis 3, **dadurch gekennzeichnet, dass** der reflektierte Laserstrahl (5) auf eine Projektionsfläche (6) gerichtet ist und der Abstand der Position des Laserstrahls (5) von einer 0-Position gemessen und damit das Ausmaß der Verdrehung bestimmt wird.

5. Verfahren nach einem der Ansprüche 1 bis 4, **dadurch gekennzeichnet, dass** in den Verlauf des Laserstrahles (5) zwischen Messpunkt und Projektionsfläche (6) mehrere Reflexionselemente eingefügt sind.

6. Verfahren nach einem der Ansprüche 1 bis 5, **dadurch gekennzeichnet, dass** als Projektionsfläche (6) ein digitaler Bildsensor vorgesehen ist und dass die Position des Laserstrahles (5) mit Mitteln der digitalen Bildverarbeitung bestimmt wird.

7. Vorrichtung zur Durchführung des Verfahrens nach einem der Ansprüche 1 bis 6, **dadurch gekennzeichnet, dass** an einem Zylindermantel (2) eines Extruders zumindest ein Messpunkt vorgesehen ist und dass an dem Messpunkt ein Reflexionselement (3) angebracht ist, dass weiterhin ein Laserelement (4) vorgesehen ist, welches so ausgerichtet ist, dass der emittierte Laserstrahl (5) von dem Reflexionselement (3) reflektiert und auf eine Projektionsfläche (6) gerichtet ist und dass Mittel zur Bestimmung des Abstandes der Position des Laserstrahls (5) auf der Projektionsfläche (6) von einer 0-Position und der daraus sich ergebenden Verdrehung des Zylindermantels (2) und Mittel zur Bestimmung der in das Extrudat eingebrachten Leistung aus der ermittelten Verdrehung vorgesehen sind.

## Claims

1. Method for determining the mechanically applied power in an extruder comprising a driven extruder screw and a cylinder jacket surrounding the same, **characterized in that** at least one reflection element (3) attached to a measuring point on the outside of the cylinder jacket is irradiated by means of a laser element (4), and the rotation of the cylinder jacket (2) at the measuring point is determined from the reflected laser beam (5), and the power introduced into the extrudate is determined therefrom.

2. Method according to Claim 1, **characterized in that** multiple measuring points are provided, and the determined values are used to determine a profile of the power introduced into the extrudate over the length of the extruder.

3. Method according to either of Claims 1 and 2, **characterized in that** mirrors are provided as reflection elements (3).

4. Method according to any of Claims 1 to 3, **characterized in that** the reflected laser beam (5) is directed at a projection surface (6), and the distance of the position of the laser beam (5) from a zero position is measured, and hence the extent of the rotation is determined.

5. Method according to any of Claims 1 to 4, **characterized in that** multiple reflection elements are inserted into the path of the laser beam (5) between the measuring point and the projection surface (6).

6. Method according to any of Claims 1 to 5, **characterized in that** a digital image sensor is provided as the projection surface (6), and **in that** the position of the laser beam (5) is determined using means of digital image processing.

7. Device for performing the method according to any of Claims 1 to 6, **characterized in that** at least one measuring point is provided on a cylinder jacket (2) of an extruder and **in that** a reflection element (3) is attached to the measuring point, **in that** a laser element (4) is furthermore provided, the latter being aligned in such a way that the emitted laser beam (5) is reflected off the reflection element (3) and directed at a projection surface (6), and **in that** provision is made for means for determining the distance of the position of the laser beam (5) on the projection surface (6) from a zero position and the resultant rotation of the cylinder jacket (2) and for means for determining the power introduced into the extrudate from the determined rotation.

## Revendications

1. Procédé pour déterminer la puissance introduite mécaniquement dans une extrudeuse, laquelle comporte une vis d'extrudeuse entraînée et une enveloppe cylindrique qui entoure celle-ci, **caractérisé en ce qu'**au moins un élément réfléchissant (3) monté au niveau d'un point de mesure sur le côté extérieur de l'enveloppe cylindrique est illuminé au moyen d'un élément laser (4) et la torsion de l'enveloppe cylindrique (2) au niveau du point de mesure est déterminée à partir du faisceau laser (5) réfléchi et la puissance introduite dans l'extrudat est déterminée à partir de celle-ci.

2. Procédé selon la revendication 1, **caractérisé en ce que** plusieurs points de mesure sont prévus et une courbe de la puissance introduite dans l'extrudat en fonction de la longueur de l'extrudeuse est déterminée à partir des valeurs déterminées.

3. Procédé selon l'une des revendications 1 ou 2, **caractérisé en ce que** des miroirs sont prévus comme éléments réfléchissants (3).

4. Procédé selon l'une des revendications 1 à 3, **caractérisé en ce que** le faisceau laser (5) réfléchi est dirigé sur une surface de projection (6) et l'écart entre la position du faisceau laser (5) et une position 0 est mesuré et l'étendue de la torsion est ainsi déterminée.

5. Procédé selon l'une des revendications 1 à 4, **caractérisé en ce que** plusieurs éléments réfléchissants sont insérés dans le trajet du faisceau laser (5) entre le point de mesure et la surface de projection (6).

6. Procédé selon l'une des revendications 1 à 5, **caractérisé en ce qu'**un capteur d'image numérique est prévu en tant que surface de projection (6) et **en ce que** la position du faisceau laser (5) est déterminée avec des moyens de traitement d'image numérique.

7. Dispositif destiné à la mise en œuvre du procédé selon l'une des revendications 1 à 6, **caractérisé en ce qu'**au moins un point de mesure est prévu sur une enveloppe cylindrique (2) d'une extrudeuse et **en ce qu'**un élément réfléchissant (3) est monté au niveau du point de mesure, **en ce qu'**en outre un élément laser (4) est prévu, lequel est orienté de telle sorte que **en ce que** le faisceau laser (5) émis est réfléchi par l'élément réfléchissant (3) et dirigé sur une surface de projection (6) et **en ce que** des moyens destinés à déterminer l'écart entre la position du faisceau laser (5) sur la surface de projection (6) et une position 0 et aussi la torsion qui en résulte de l'enveloppe cylindrique (2) ainsi que des moyens destinés à déterminer la puissance introduite dans l'extrudat à partir de la torsion déterminée sont prévus.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1798201 A1